# FASCICULE DE BREVET EUROPEEN

(11) **EP 2 699 376 B1**
(45) Date de publication et mention de la délivrance du brevet: **07.08.2019**
(21) Numéro de dépôt: 12717095.9
(22) Date de dépôt: 19.04.2012
(51) Int. Cl.: B23K 20/12, H01M 2/20

(54) **DISPOSITIF ET PROCEDE DE SOUDAGE PAR FRICTION MALAXAGE D'UN ENSEMBLE DE STOCKAGE D'ENERGIE ELECTRIQUE**
VERFAHREN UND VORRICHTUNG ZUM REIBRÜHRSCHWEISSEN EINER ELEKTRISCHEN ENERGIESPEICHERANORDNUNG
METHOD AND DEVICE FOR FRICTION STIR WELDING AN ELECTRIC ENERGY STORAGE ASSEMBLY

(30) Priorité: 20.04.2011 FR 1153430
(43) Date de publication de la demande: 26.02.2014
(73) Titulaire: Blue Solutions, 29500 Ergué Gabéric (FR)
(72) Inventeur: VIGNERAS, Erwan, 29000 Quimper (FR)
(74) Mandataire: Regimbeau
(86) Numéro de dépôt international: PCT/EP2012/057112
(87) Numéro de publication internationale: WO 2012/143414

(56) Documents cités:
- DE-B3-102006 050 709
- FR-A1- 2 915 626
- US-A1- 2011 081 568
- US-A1- 2011 081 569
- US-A1- 2011 086 255

## Description

### DOMAINE TECHNIQUE

La présente invention concerne le domaine technique des ensembles de stockage d'énergie électrique.

On entend, dans le cadre de la présente invention, par « ensemble de stockage d'énergie électrique », soit un condensateur (i.e. un système passif comprenant des électrodes et un isolant), soit un supercondensateur (i.e. un système passif comprenant au moins deux électrodes, un électrolyte et au moins un séparateur), soit une batterie (i.e. un système comprenant une anode, une cathode et une solution d'électrolyte entre l'anode et la cathode), par exemple de type batterie au lithium.

De tels ensembles de stockage d'énergie sont le plus souvent associés dans des modules de stockage d'énergie, permettant de remplir le cahier des charges spécifiques à certaines applications.

### ETAT DE LA TECHNIQUE

On connaît dans l'état de la technique un module de stockage d'énergie comprenant une pluralité d'ensemble de stockage d'énergie, chaque ensemble de stockage d'énergie étant contenu dans une enveloppe cylindrique. Les enveloppes cylindriques sont placées côte à côte dans le module et sont reliées électriquement entre elles, en série, par des barrettes de connexion.

Chaque barrette de connexion est placée sur une des parois extrêmes sensiblement plane du cylindre et sur la paroi extrême correspondante du cylindre voisin.

Dans l'état de la technique, la barrette de connexion, est soudée sur chaque enveloppe par un procédé de soudage LASER, comme cela est par exemple décrit dans le document FR 2 915 626.

Le soudage LASER est un soudage par transparence qui crée un point de fusion très localisé dans les deux matériaux à souder. Les matériaux fondus se mélangent alors puis l'ensemble se solidifie à nouveau quasi-instantanément, au vu du caractère très localisé de la fusion. Toutefois, la réalisation de la soudure dépend du réglage fin d'une pluralité de paramètres, notamment la focale du laser, la puissance de celui-ci, etc.

Or, la connexion de l'enveloppe de l'ensemble de stockage d'énergie avec la barrette de connexion est effectuée après que l'électrolyte ait été introduit dans l'enveloppe et que le trou d'imprégnation ait été rebouché. Il est donc très important de garder l'enveloppe étanche, au risque d'introduire des impuretés dans l'électrolyte de l'ensemble de stockage, et de réduire substantiellement la durée de vie de celui-ci, voire d'entraîner sa mise au rebut.

Le document US 2011/086255 décrit un procédé d'assemblage d'un ensemble de stockage comprenant une étape consistant à fixer un membre électriquement conducteur entre deux cellules de batteries. L'étape de fixation du membre sur les cellules de batterie peut être réalisée par soudage à l'arc, soudage au gaz, soudage par faisceau d'énergie, soudage par friction, soudage par induction ou soudage par ultrasons.

Le document US 2011/081568 décrit un procédé de fabrication de module de batterie (cf. abrégé). Dans US 2011/081568 une barre de connexion est soudée aux batteries en utilisant des techniques de soudage conventionnelles. Des barres de connexion sont soudées l'une à l'autre par friction-malaxage.

On a constaté que le procédé de soudage LASER, du fait des différents paramètres de celui-ci influant sur la fusion de la zone à souder, était difficilement répétable et pouvait entraîner un perçage du couvercle durant le procédé de fusion si le faisceau est trop puissant ou trop focalisé.

Pour obtenir un procédé de soudage fiable, il est donc nécessaire de prévoir une enveloppe pour l'ensemble de stockage ayant une épaisseur relativement importante et/ou une conception particulière, évitant ainsi qu'un léger dérèglement des paramètres du LASER dégrade l'étanchéité de l'enveloppe, et/ou de surveiller à l'aide de moyens très précis les différents paramètres du LASER permettant la soudure de la barrette sur l'enveloppe de l'ensemble de stockage, ce qui entraîne une hausse non négligeable des coûts de fabrication.

Un but de la présente invention est de proposer un procédé de fabrication simple et peu coûteux d'un module de stockage d'énergie permettant tout de même de maintenir l'étanchéité de chacun des ensembles de stockage d'énergie.

### RESUME DE L'INVENTION

A cet effet, on propose un procédé de liaison de deux ensembles de stockage d'énergie selon la revendication 1.

On entend, dans le cadre de la présente invention, par « face extrême », la face supérieure ou inférieure d'une enveloppe destinée à être en regard de la barrette. Dans le cas d'une enveloppe présentant un axe longitudinal (tel qu'une enveloppe cylindrique), les faces extrêmes sont par exemple les faces perpendiculaires à l'axe longitudinal de l'enveloppe.

Chaque ensemble de stockage comprend de préférence au moins deux électrodes et un électrolyte. Les ensembles peuvent être identiques, soit de même forme et de même type (supercapacité, batteries, etc.), ou alors de forme et/ou de type distinct.

Un tel procédé est très avantageux. En effet, le soudage par friction-malaxage est une technique de soudage dans laquelle on entraîne un outil très rapidement en rotation sur les pièces à souder. L'outil pénètre dans la matière en l'échauffant jusqu'à l'état pâteux. L'échauffement associé au malaxage permet de souder la matière constituant les pièces à souder. La soudure est effectuée à l'état pâteux, et l'outil n'échauffe que la matière qui est à son contact.

Ainsi, ce procédé est très facile à contrôler puisqu'il n'y a pas de risque que de la matière pollue l'électrolyte du fait de la soudure si l'outil lui-même ne traverse pas l'enveloppe. Le contrôle du procédé revient donc à une vérification, simple à effectuer, du déplacement de l'outil. Il n'est pas non plus nécessaire d'augmenter l'épaisseur du couvercle autant que dans le cas du soudage LASER.

Comme le soudage est effectué à l'état pâteux, on notera également qu'il n'y a pas de risque de fissuration à chaud, également susceptible de dégrader l'étanchéité de l'enveloppe.

Un procédé selon l'invention permet donc de lier entre eux les ensembles de stockage d'énergie de façon simple et peu coûteuse tout en conservant l'étanchéité de chaque ensemble de stockage.

Le procédé selon l'invention présente également de nombreux autres avantages.

En particulier, il permet d'augmenter la conduction électrique entre les différents ensembles de stockage d'énergie et ce, sans devoir augmenter le temps de cycle de façon importante.

En effet, on constate qu'avec le procédé selon l'invention, le cordon de soudure correspond à la taille de l'outil de friction malaxage, qui n'est pas limitée par des contraintes de puissance de l'outil, contrairement à ce qui est le cas dans l'état de la technique pour le soudage LASER (puissance grandement liée à la taille du faisceau). Il est donc possible d'augmenter la largeur du cordon ou des points de soudure en augmentant la taille de l'outil et, de ce fait, la conduction électrique entre la barrette et chaque enveloppe, sans avoir pour autant besoin d'effectuer plusieurs passages de l'outil de soudage sur la zone à souder et donc en gardant un temps de fabrication peu important.

Pour les mêmes raisons (largeur du cordon), la conduction thermique depuis la partie supérieure de l'ensemble de stockage vers la barrette est améliorée. L'évacuation de la chaleur est donc optimisée grâce au procédé selon l'invention.

En outre, la barrette peut être plus économique car de forme plus simple. On n'a pas en effet besoin d'évider la barrette pour diminuer localement les épaisseurs, ce qui est effectué dans l'état de la technique pour faciliter le soudage LASER. L'utilisation d'une barrette non évidée permet également de maximiser la surface de la barrette en contact avec le tapis conducteur d'un module, ce qui assure également une meilleure évacuation de la chaleur vers l'extérieur du module.

Enfin, le procédé selon l'invention est effectué en chauffant la matière de l'enveloppe bien moins que dans l'état de la technique. Les risques d'endommager l'électrolyte à l'intérieur de l'enveloppe ou l'élément de stockage d'énergie proprement dit sont donc diminués par rapport au soudage LASER.

Le procédé selon l'invention peut également comprendre l'une ou plusieurs des caractéristiques suivantes :
- la barrette et l'enveloppe peuvent être soudées sur une distance d'au moins 1 cm de long, ce qui permet d'augmenter la conduction électrique de l'ensemble.
- l'enveloppe et la barrette peuvent être superposées selon une face de contact normale à l'axe prédéterminé, notamment la face extrême, de sorte que, lors de l'étape de soudage, on traverse la barrette pour atteindre l'enveloppe,
- la barrette et l'enveloppe peuvent être en contact selon une face de contact comprenant l'axe prédéterminé, de sorte que la barrette et l'enveloppe sont soudés bord à bord. L'outil peut donc dans ce cas pénétrer simultanément dans le matériau de l'enveloppe et de la barrette. Ce mode de réalisation est généralement appliqué lorsque l'enveloppe comprend une protubérance formant moyens de positionnement de la barrette,
- la barrette peut être réalisée en un matériau conducteur, notamment en cuivre,
- l'enveloppe peut être réalisée au moins partiellement en matériau métallique, notamment en aluminium,
- la face extrême de l'enveloppe peut être réalisée en un premier matériau, la barrette étant réalisée en un deuxième matériau distinct du premier matériau. Le procédé selon l'invention permet en effet d'avoir une barrette et une enveloppe réalisée en matériaux distincts. En effet, comme le soudage est effectué à l'état pâteux du matériau, le procédé permet de souder sans difficulté deux matériaux distincts, ayant des propriétés différentes. Dans l'état de la technique, il est difficile de souder deux matériaux distincts (à l'aide de la technique de soudage LASER) notamment si leurs températures de fusion respectives sont assez éloignées l'une de l'autre. Cela est notamment un problème si l'on souhaite souder de l'aluminium, plébiscité pour la fabrication de l'enveloppe au vu de ses propriétés de rigidité et de légèreté, avec du cuivre, ayant d'excellentes propriétés de conduction électrique et pouvant être avantageusement utilisé pour fabriquer la barrette. Des températures de fusion éloignées peuvent en effet générer de nombreuses difficultés techniques, dont notamment une différence de retrait qui ne permet pas d'obtenir une soudure fiable et durable des deux matériaux. Grâce au procédé selon l'invention, on peut optimiser le choix des matériaux constituant les différents éléments à assembler (par exemple, cuivre pour la barrette, aluminium pour l'enveloppe) car le procédé n'ajoute aucune contrainte limitant ce choix.
   De même, le procédé selon l'invention peut être utilisé pour souder des aluminium alliés (type série 6000, par exemple) ayant des propriétés mécaniques avantageuses mais difficile à souder par le biais d'un procédé de soudage LASER.

L'invention a également pour objet un module d'au moins deux ensembles de stockage d'énergie, chaque ensemble de stockage d'énergie comprenant une enveloppe étanche, les ensembles étant liés deux à deux à l'aide d'une barrette de connexion, conformément au procédé décrit ci-dessus.

Le cordon de soudure de la barrette sur l'enveloppe est de dimensions supérieures à 3 mm, notamment à 5 mm selon toutes les directions du plan de la face extrême.

### BREVE DESCRIPTION DES FIGURES

D'autres caractéristiques, buts et avantages de la présente invention ressortiront encore de la description qui suit, laquelle est purement illustrative et non limitative et doit être lue au regard des dessins annexés sur lesquels :
- la figure 1 est une vue en coupe radiale d'un ensemble de stockage d'énergie d'un module selon un mode de réalisation de l'invention,
- la figure 2 est une vue de dessus d'un module comprenant deux ensembles de stockage d'énergie, selon le premier mode de réalisation,
- la figure 3 est une représentation en coupe radiale d'un dispositif de friction-malaxage permettant de mettre en oeuvre le procédé selon un mode de réalisation de l'invention,
- les figures 4A et 4B sont des vues en coupe de détail des interfaces de l'ensemble de stockage et d'une barrette de connexion, une fois soudés,
- les figures 5A à 5C sont des vues en perspectives de modules qui n'entrent pas dans le cadre de l'invention.

### DESCRIPTION DETAILLEE DE L'INVENTION

On va maintenant décrire plus en détail un procédé de liaison de deux ensemble, notamment supercondensateurs, selon un mode de réalisation de l'invention.

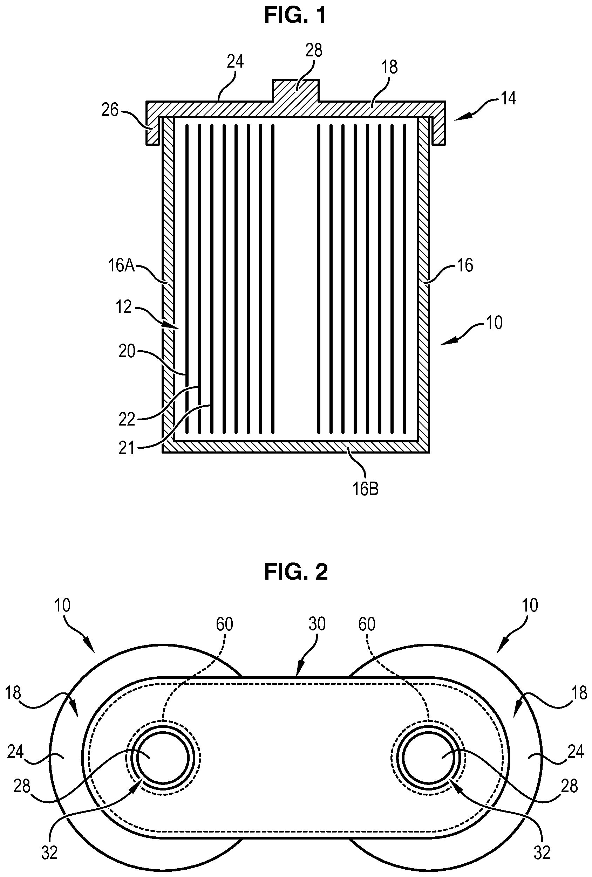

En référence à la figure 1, on a illustré un exemple de réalisation d'un supercondensateur pour lequel on met en oeuvre le procédé selon l'invention.

Le supercondensateur 10 comprend un enroulement 12 mis en place dans une enveloppe 14 constituée dans le mode de réalisation décrit d'un boîtier 16, comprenant une paroi latérale cylindrique 16A et un fond 16B, et d'un couvercle 18 coiffant le boîtier 16 pour fermer celui-ci. L'enveloppe contient également une électrolyte liquide, non visible sur la figure pour des raisons de clarté.

Le boîtier 16 et le couvercle 18 sont collés sur toute leur périphérie de façon à assurer l'étanchéité du supercondensateur. Le boîtier 16 et le couvercle sont généralement réalisés en aluminium. Ils sont également isolés électriquement l'un de l'autre grâce au cordon de colle continu qui permet leur liaison pour éviter un court-circuit.

L'enroulement 12 est constitué d'une unité comprenant deux feuilles d'électrode 20, 21 et un séparateur isolant 22 superposés, le séparateur étant interposé entre les deux feuilles d'électrode 20, 21.

Chaque feuille d'électrode comprend un collecteur et une électrode constituée par un matériau actif, à base notamment de charbon actif, et déposée sur les deux faces opposées du collecteur. Le collecteur de chacune des électrodes est relié respectivement au boîtier 16 et au couvercle 18, le boîtier et le couvercle formant donc respectivement les bornes positive et négative de l'ensemble de stockage d'énergie.

Le couvercle 18 comprend une face supérieure 24 et un bord tombé 26 cylindrique, suivant le contour du boîtier 16. La face supérieure 24 du couvercle et le fond 16B du boîtier forment les faces extrêmes de l'enveloppe. Le couvercle comprend également une protubérance 28 centrale, appelée dans la suite pion de centrage.

Comme indiqué plus haut, les ensembles de stockage d'énergie sont souvent assemblés en série pour former un module dédié à une application particulière. Pour assembler les différents ensembles en série, il faut généralement, d'une part, relier le boîtier 16 d'un ensemble à au moins un ensemble adjacent et d'autre part, relier le couvercle 18 à un autre ensemble adjacent. Les ensembles reliés aux bornes du module ne sont connectés qu'à un ensemble adjacent.

On a représenté sur la figure 2 une vue de dessus d'un module de deux ensembles de stockage selon la figure 1.

On voit que les couvercles 18 de ces deux ensembles sont assemblés par une barrette de connexion 30, disposée sur la face supérieure 24 de chacun des couvercles. La barrette de connexion 30 est de forme allongée, plane et comprend au voisinage de chacune de ses extrémités selon sa direction longitudinale un orifice 32 de dimensions complémentaires de celles du pion de centrage 28 du barrette du couvercle 14. La barrette est bien entendu de longueur supérieure au diamètre d'un ensemble de stockage. Sa longueur est notamment comprise entre une et trois fois le diamètre de l'ensemble. L'espacement entre les deux orifices 32 est également supérieur au diamètre de l'ensemble.

Comme on le voit sur la figure, la barrette est pleine mais pourrait également comprendre des évidements et sa forme n'est pas arrêtée.

On va maintenant décrire le procédé de liaison de barrette sur les couvercles.

Lors d'une première étape, on positionne la barrette 30 sur les couvercles, notamment en positionnant les orifices 32 chacun sur un pion de centrage 28 des couvercles 18 des ensembles 10 de stockage d'énergie. Les pions de centrage 28 sont dimensionnés pour être essentiellement de même épaisseur que la barrette.

Une fois la barrette mise en place, on soude celle-ci sur chacun des couvercles par friction-malaxage ou FSW, acronyme anglais de Friction Stir Welding.

Pour cela, on s'aide d'un dispositif de friction-malaxage tel que décrit ci-après. On expliquera cette étape de soudage par friction-malaxage une fois que la description du dispositif effectuée.

Le dispositif comprend un corps de forme cylindrique 50 s'étendant le long d'un axe de révolution A-A'. Le matériau constituant le corps 50 est par exemple de l'acier ou tout type de matériau de dureté supérieure à celle du matériau constituant la pièce à souder.

Le dispositif comprend également une tête 51 s'étendant à l'une des extrémités axiales du corps 50. La tête comporte une pointe 52 de forme tronconique et un épaulement 54 périphérique s'étendant dans un plan sensiblement perpendiculaire à l'axe de révolution A-A' du corps 50.

Le corps 50 et la tête 51 du dispositif sont adaptés pour être entrainé en rotation autour d'un axe de rotation correspondant à l'axe de révolution A-A' du corps 50. Lors de l'opération de soudure, la tête du dispositif pénètre dans la matière en l'échauffant jusqu'à l'état pâteux. L'échauffement associé au malaxage permet de souder la matière constituant les pièces à souder, ici la barrette 30 et le couvercle 18. Après refroidissement, la soudure est terminée.

Grâce au dispositif selon l'invention, l'échauffement de la pièce est réduit car la soudure se fait à l'état pâteux. Cela réduit les risques de détérioration de l'ensemble de stockage.

La forme en tronc de cône de la tête du dispositif permet d'emprisonner la matière et ainsi de limiter la création de copeaux. Cette forme en tronc de cône permet également de diriger la matière échauffée contre l'épaulement pour reboucher le trou formé par la tête du dispositif lorsque celui-ci avance.

Le dispositif comprend également un moteur (non représenté) pour entraîner en rotation le corps 50 et la tête 51 du dispositif. Le moteur est par exemple apte à faire tourner le corps et la tête du dispositif à une vitesse comprise entre 500 et 5000 tours/minute, et préférentiellement égale à 1000 tours/minute.

Ainsi, lors de cette étape de soudage, on met en marche le dispositif 50 et on le place sur l'ensemble de sorte que l'axe A-A' de révolution de l'outil soit confondu avec l'axe de symétrie de l'ensemble. On place tout d'abord le dispositif 50 de sorte que la tête 51 de celui-ci recouvre à la fois le pion de centrage 28 du couvercle et la barrette 30, au voisinage de l'orifice 32.

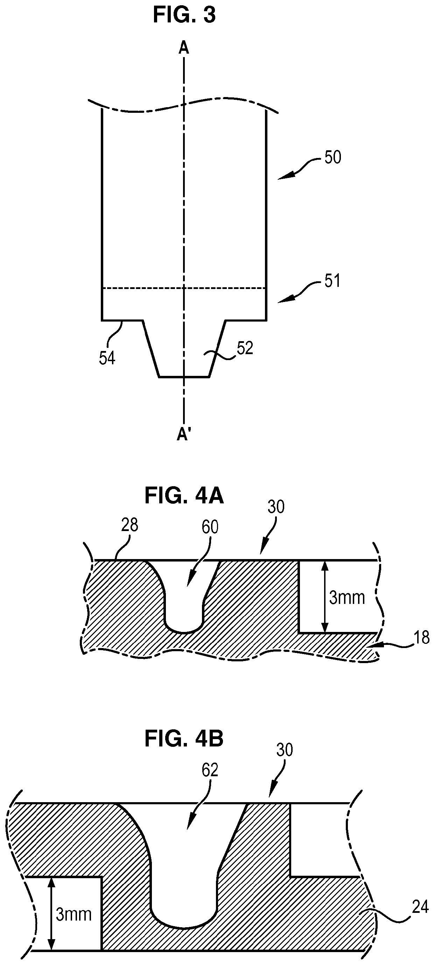

Les deux pièces (barrette 30 et pion de centrage 28) étant en affleurement comme représenté à la figure 4A, on translate le dispositif 50 selon l'axe A-A', de sorte qu'il pénètre à peu près simultanément dans les deux pièces. Du fait de son mouvement de rotation, il rend localement la matière pâteuse et mélange la matière de la barrette et du pion de centrage. Le pion de centrage 28 et la barrette 30 sont alors soudés bord à bord grâce à un cordon de soudure 60.

Une fois que le dispositif 50 a pénétré dans les deux pièces, on le dirige de sorte qu'il se déplace le long du contour du pion de centrage 28 puis on retire le dispositif. Une fois ces étapes effectuées, la matière refroidit et la soudure est effectuée. Le cordon 60 présente la largeur de la tête de l'outil soit 3 à 5 mm de large et son parcours est représenté en pointillés sur la figure 2.

Ensuite, pour renforcer le soudage de la barrette et du couvercle, on place le dispositif 50 au niveau du pourtour de la barrette 30. On enfonce la tête du dispositif de sorte qu'elle traverse la barrette, une fois la matière de celle-ci échauffée, pour atteindre la face supérieure 24 du couvercle puis pénétrer également dans celui-ci. Les matières du couvercle et de la barrette se mélangent également du fait du mouvement du dispositif 50, comme on le voit sur la figure 4B, et on déplace le dispositif 50 le long du pourtour de la barrette dans sa partie superposée avec le couvercle. Le cordon de soudure 62, également représenté en pointillés sur la figure 2, est continu peut donc être long de plusieurs centimètres.

Une fois le soudage de la barrette 30 avec un ensemble de stockage 10 effectuée, on renouvelle l'opération avec l'autre ensemble.

Le procédé selon l'invention est très avantageux puisqu'il permet de souder sans échauffer la matière et donc sans risquer d'endommager l'électrolyte située à l'intérieur de l'enveloppe.

En outre, il permet de mettre au point des cordons de soudure de dimensions plus grande que dans le cadre de la soudure LASER, ce qui est intéressant pour diminuer la résistance électrique du module.

On notera que l'invention n'est pas limitée au mode de réalisation décrit.

Par exemple, l'ensemble de stockage d'énergie n'est pas forcément tel que celui décrit ci-dessus. Il peut être parallélépipédique et non cylindrique, et/ou peut comprendre deux couvercles situés à chaque extrémité d'un tube ouvert.

De même, le procédé n'est pas limité à ce qui a été décrit ci-dessus. La barrette ne peut comprendre qu'un des deux cordons de soudure décrits plus haut.

On pourrait également envisager de réaliser un procédé selon l'invention avec un dispositif de soudage présentant une configuration différente de celle décrite.

Enfin, un module comprenant plus de deux ensembles de stockage d'énergie entre bien entendu dans la définition de l'invention. Les ensembles peuvent également être des batteries et/ou des condensateurs, ou peuvent être de types distincts (un des ensembles étant une batterie, l'autre étant un supercondensateur, par exemple).

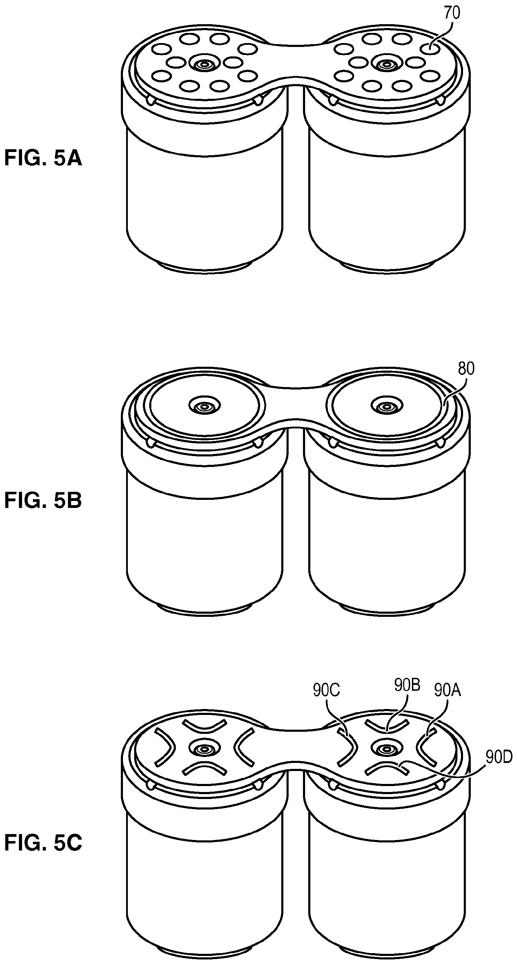

Les figures 5A à 5B concernent des exemples qui ne sont pas couverts par les revendications. Comme représenté sur figures 5A à 5C, le couvercle peut également présenter une face extrême plane et ne pas comprendre de pion de centrage, D'autres moyens de centrage peuvent éventuellement remplacer le pion de centrage, tels que des protubérances suivant le contour extérieur de la barrette. 5 La barrette de connexion peut également être différente de ce qui a été décrit. Elle peut ne pas comprendre d'orifice, comme représenté sur les variantes des figures 5A à 5C. Elle peut également relier deux boîtiers ensemble ou un boîtier à un couvercle. Elle peut aussi être soudée au couvercle en d'autres lieux que ceux décrits. Par exemple, elle pourrait être soudée à l'aide de points de soudure 70 (comme représenté à la figure 5A), à l'aide d'un cordon de soudure 80 circulaire et continu formant un cercle de rayon environ égal à une moitié de rayon du couvercle (comme 15 représenté à la figure 5B) ou à l'aide de multiples cordons 80A, 80B, 80C, 80D, en forme de V et répartis régulièrement sur la face extrême du couvercle d'un ensemble (comme représenté à la figure 5C).On notera que, dans les variantes représentées aux figures 5A à 5C, les cordons de soudure traversent la barrette pour atteindre le couvercle de l'ensemble de stockage et sont donc semblables à celui représenté sur 20 la figure 4B.

## Revendications

1. Procédé de liaison de deux condensateurs ou supercondensateurs (10), chacun d'entre eux comprenant une enveloppe (14) étanche, chaque enveloppe (14) comprenant un élément tubulaire (16) et au moins un couvercle (18) fermant l'élément tubulaire à son extrémité, ce couvercle (18) comprenant un pion de centrage (28) formant des moyens de positionnement de la barrette (30) sur celui-ci, ce procédé comprenant les étapes consistant à :
- positionner, sur les couvercles (18) de deux enveloppes (14) placées côte à côte, une barrette de connexion (30), dimensionnée pour être en contact avec le couvercle (18) de chacune des enveloppes, cette barrette (30) comprenant deux orifices (32) permettant son positionnement sur les pions (28),
ce procédé étant **caractérisé en ce qu'**il comprend les étapes consistant à :
- mettre en contact avec le couvercle (18) et la barrette (30), un dispositif de soudure par friction malaxage (50) mobile en rotation, translater ce dispositif selon un axe prédéterminé, normal audit couvercle (18), de sorte qu'il pénètre dans la matière du couvercle (18) et de la barrette (30), et le déplacer de façon à souder la barrette (30) sur le couvercle (18), par friction malaxage, en formant un premier cordon de soudure (60) le long du contour de l'un des deux pions de centrage (28)
- -retirer ledit dispositif de soudure par friction malaxage (50) du couvercle (18) et de la barrette (30) après la formation du premier cordon de soudure (60),
- mettre en contact avec le couvercle (18) et la barrette (30), ledit dispositif de soudure par friction malaxage (50) mobile en rotation, translater ce dispositif selon un axe prédéterminé, normal audit couvercle (18), de sorte qu'il pénètre dans la matière du couvercle (18) et de la barrette (30), et le déplacer de façon à souder la barrette (30) sur le couvercle (18), par friction malaxage, en formant un deuxième cordon de soudure (60) le long du contour de l'autre des deux pions de centrage (28),
- retirer ledit dispositif de soudure par friction malaxage (50) du couvercle (18) et de la barrette (30) après la formation du deuxième cordon de soudure (60),
et/ou les étapes consistant à :
- mettre en contact avec la barrette (30), le dispositif de soudure par friction malaxage (50) mobile en rotation, translater ce dispositif selon un axe prédéterminé, normal audit couvercle (18), de sorte qu'il pénètre dans la matière de la barrette (30) et du couvercle (18), et le déplacer de façon à souder la barrette (30) sur le couvercle (18), par friction malaxage, en formant un cordon de soudure (62) tout le long du pourtour de la barrette de connexion (30), et
- retirer ledit dispositif de soudure par friction malaxage (50) du couvercle (18) et de la barrette (30) après la formation du cordon de soudure (62) tout le long du pourtour de la barrette de connexion (30).

2. Procédé selon la revendication 1, **caractérisé en ce qu'**on soude la barrette (30) et le couvercle (18) sur une distance d'au moins 1 cm de long.

3. Procédé selon la revendication 1 ou 2, **caractérisé en ce que** la barrette (30) et le couvercle (18) sont superposés selon une face de contact normale à l'axe prédéterminé, de sorte que, lors de l'étape de soudage, on traverse la barrette (30) pour atteindre le couvercle (18).

4. Procédé selon la revendication 1 ou 2, **caractérisé en ce que** la barrette (30) et le couvercle (18) sont en contact selon une face de contact comprenant l'axe prédéterminé, de sorte que la barrette (30) et le couvercle (18) sont soudés bord à bord.

5. Procédé selon l'une quelconque des revendications précédentes, **caractérisé en ce que** le couvercle (18) est réalisé en un premier matériau, la barrette (30) étant réalisée en un deuxième matériau distinct du premier matériau.

6. Module d'au moins deux condensateurs ou supercondensateurs (10), chacun d'entre eux comprenant une enveloppe (14) étanche, chaque enveloppe (14) comprenant un élément tubulaire (16) et au moins un couvercle (18) fermant l'élément tubulaire à son extrémité, ce couvercle (18) comprenant un pion de centrage (28) formant des moyens de positionnement de la barrette (30) sur celui-ci, les condensateurs ou supercondensateurs (10) étant liés deux à deux à l'aide d'une barrette de connexion (30) qui comprend deux orifices (32) permettant son positionnement sur les pions (28), cette liaison étant réalisée conformément au procédé selon l'une quelconque des revendications 1 à 5.

7. Module selon la revendication précédente, **caractérisé en ce que** les dimensions d'au moins l'un des cordons de soudure (60, 62) sont supérieures à 3 mm, notamment à 5 mm, selon toutes les directions du plan du couvercle (18).

## Patentansprüche

1. Verfahren zum Verbinden von zwei Kondensatoren oder Superkondensatoren (10), von denen jeder eine dichte Hülle (14) umfasst, wobei jede Hülle (14) ein rohrförmiges Element (16) und mindestens eine Abdeckung (18) umfasst, die das rohrförmige Element an seinem Ende schließt, wobei diese Abdeckung (18) einen Zentrierstift (28) umfasst, der Mittel zur Positionierung der Brücke (30) darauf bildet, wobei das Verfahren die Schritte umfasst, die aus Folgendem bestehen:
- Positionieren einer Verbindungsbrücke (30), die bemessen ist, um mit der Abdeckung (18) von jeder der Hüllen in Kontakt zu sein, auf den Abdeckungen (18) von zwei Hüllen (14), die nebeneinander platziert sind, wobei diese Brücke (30) zwei Öffnungen (32) umfasst, die ihre Positionierung auf den Stiften (28) ermöglicht,
wobei dieses Verfahren **dadurch gekennzeichnet ist, dass** es die Schritte umfasst, die aus Folgendem bestehen:
- Inkontaktbringen einer drehbeweglichen Vorrichtung (50) zum Reibrührschweißen mit der Abdeckung (18) und der Brücke (30), translatorisches Bewegen dieser Vorrichtung entlang einer vorbestimmten Achse normal zu der Abdeckung (18), derart dass sie in das Material der Abdeckung (18) und der Brücke (30) eindringt, und ihr Verschieben, derart dass die Brücke (30) durch Reibrührschweißen unter Bildung einer ersten Schweißnaht (60) entlang des Umfangs von einem von den zwei Zentrierstiften (28) auf die Abdeckung (18) geschweißt wird,
- Zurückziehen der Vorrichtung (50) zum Reibrührschweißen von der Abdeckung (18) und der Brücke (30) nach dem Bilden der ersten Schweißnaht (60),
- Inkontaktbringen der drehbeweglichen Vorrichtung (50) zum Reibrührschweißen mit der Abdeckung (18) und der Brücke (30), translatorisches Bewegen dieser Vorrichtung entlang einer vorbestimmten Achse normal zur Abdeckung (18), derart dass sie in das Material der Abdeckung (18) und der Brücke (30) eindringt, und ihr Verschieben, derart dass die Brücke (30) durch Reibrührschweißen unter Bildung einer zweiten Schweißnaht (60) entlang des Umfangs von dem anderen von den zwei Zentrierstiften (28) auf die Abdeckung (18) geschweißt wird,
- Zurückziehen der Vorrichtung (50) zum Reibrührschweißen von der Abdeckung (18) und der Brücke (30) nach dem Bilden der zweiten Schweißnaht (60),
und/oder die Schritte, die aus Folgendem bestehen:
- Inkontaktbringen der drehbeweglichen Vorrichtung (50) zum Reibrührschweißen mit der Brücke (30), translatorisches Bewegen dieser Vorrichtung entlang einer vorbestimmten Achse normal zu der Abdeckung (18), derart dass sie in das Material der Brücke (30) und der Abdeckung (18) eindringt, und ihr Verschieben, derart dass die Brücke (30) durch Reibrührschweißen unter Bildung einer Schweißnaht (62) entlang des gesamten Umfangs der Verbindungsbrücke (30) auf die Abdeckung (18) geschweißt wird, und
- Zurückziehen der Vorrichtung (50) zum Reibrührschweißen von der Abdeckung (18) und der Brücke (30) nach dem Bilden der Schweißnaht (62) entlang des gesamten Umfangs der Verbindungsbrücke (30).

2. Verfahren nach Anspruch 1, **dadurch gekennzeichnet, dass** die Brücke (30) und die Abdeckung (18) über eine Strecke mit einer Länge von mindestens 1 cm geschweißt werden.

3. Verfahren nach Anspruch 1 oder 2, **dadurch gekennzeichnet, dass** die Brücke (30) und die Abdeckung (18) derart entlang einer Kontaktfläche normal zur vorbestimmten Achse übereinanderliegen, dass beim Schweißschritt die Brücke (30) durchquert wird, um die Abdeckung (18) zu erreichen.

4. Verfahren nach Anspruch 1 oder 2, **dadurch gekennzeichnet, dass** die Brücke (30) und die Abdeckung (18) derart entlang einer Kontaktfläche in Kontakt sind, die die vorbestimmte Achse umfasst, dass die Brücke (30) und die Abdeckung (18) stumpfgeschweißt werden.

5. Verfahren nach einem der vorhergehenden Ansprüche, **dadurch gekennzeichnet, dass** die Abdeckung (18) aus einem ersten Material besteht, wobei die Brücke (30) aus einem zweiten Material besteht, das sich von dem ersten Material unterscheidet.

6. Modul aus mindestens zwei Kondensatoren oder Superkondensatoren (10), von denen jeder eine dichte Hülle (14) umfasst, wobei jede Hülle (14) ein rohrförmiges Element (16) und mindestens eine Abdeckung (18) umfasst, die das rohrförmige Element an seinem Ende schließt, wobei diese Abdeckung (18) einen Zentrierstift (28) umfasst, der Mittel zur Positionierung der Brücke (30) darauf bildet, wobei die Kondensatoren oder Superkondensatoren (10) paarweise mittels einer Verbindungsbrücke (30) verbunden sind, die zwei Öffnungen (32) umfasst, die ihre Positionierung auf Stiften (28) erlaubt, wobei diese Verbindung mit einem Verfahren nach einem der Ansprüche 1 bis 5 hergestellt wird.

7. Modul nach dem vorhergehenden Anspruch, **dadurch gekennzeichnet, dass** die Abmessungen von mindestens einer von den Schweißnähten (60, 62) in allen Richtungen der Ebene der Abdeckung (18) größer als 3 mm, insbesondere als 5 mm, sind.

## Claims

1. A method for connecting two capacitors or supercapacitors (10), each of them comprising a sealed housing (14), each housing (14) comprising a tubular element (16) and at least one lid (18) closing the tubular element at its end, this lid (18) comprising a centring pin (28) forming means for positioning the strip (30) thereupon, this method comprising the steps consisting in:
- on the two lids (18) of two housings (14) placed side by side, a connector strip (30) is positioned sized to be in contact with the lid (18) of each of the housings, this strip (30) comprising two orifices (32) allowing its positioning on the pins (28),
this method being **characterized in that** it comprises the steps consisting in:
- placing in contact with the lid (18) and the strip (30), a friction stir welding device (50) mobile in rotation, translating this device along a predetermined axis normal to said lid (18), so that it enters into the material of the lid (18) and of the strip (30) and displace it in order to weld the strip (30) on the cover (18) by friction stir welding, thus forming a first weld bead (60) along the contour of one of the two centring pins (28),
- withdrawing said friction stir welding device (50) from the lid (18) and from the strip (30) after the formation of the first weld bead (60),
- placing in contact with the lid (18) and the strip (30), a friction stir welding device (50) mobile in rotation, translating this device along a predetermined axis normal to said lid (18), so that it enters into the material of the lid (18) and of the strip (30) and displace it in order to weld the strip (30) on the cover (18) by friction stir welding, thus forming a second weld bead (60) along the contour of the other of the two centring pins (28),
- withdrawing said friction stir welding device (50) from the lid (18) and from the strip (30) after the formation of the second weld bead (60),
- and/or the steps consisting in:
- placing in contact with the strip (30), the friction stir welding device (50) mobile in rotation, translating this device along a predetermined axis normal to said lid (18), so that it enters into the material of the strip (30) and of the lid (18) and displace it in order to weld the strip (30) on the cover (18) by friction stir welding, thus forming a weld bead (62) along the contour of the connector strip (30), and
- withdrawing said friction stir welding device (50) from the lid (18) and from the strip (30) after the formation of the weld bead (62) along the contour of the connector strip (30).

2. The method according to claim 1, **characterized in that** the strip (30) and the lid (18) are welded over a distance at least 1 cm in length.

3. The method according to claims 1 or 2, **characterized in that** the strip (30) and the lid (18) are superimposed on a contact surface normal to the predetermined axis so that welding passes through the strip (30) to reach the lid (18).

4. The method according to claims 1 or 2, **characterized in that** the strip (30) and the lid (18) are in contact on a contact surface comprising the predetermined axis so that the strip (30) and the lid (18) are welded edge to edge.

5. The method according to any of the preceding claims, **characterized in that** the lid (18) is made in a first material, the strip (30) being made in a second material different from the first material.

6. A module of at least two capacitors or supercapacitors (10), each of them comprising a sealed housing (14), each housing (14) comprising a tubular element (16) and at least one lid (18) closing the tubular element at its end, this lid (18) comprising a centring pin (28) forming means for positioning the strip (30) thereupon, the capacitors or supercapacitors (10) being connected in pairs by means of a connector strip (30) which comprises two orifices (32) allowing its positioning on the pins (28), this connection being done conforming to the method according to any of claims 1 to 5.

7. The module according to the preceding claim, **characterized in that** the dimensions of at least one weld bead (60, 62) are larger than 3 mm, in particular larger than 5 mm, in all directions of the plane of the lid (18).
